# EUROPÄISCHE PATENTSCHRIFT

(11) **EP 3 892 494 B1**
(45) Veröffentlichungstag und Bekanntmachung des Hinweises auf die Patenterteilung: **14.12.2022**
(21) Anmeldenummer: 21160964.9
(22) Anmeldetag: 05.03.2021
(51) Int. Cl.: B61D 37/00, B60N 3/00

(54) **FAHRGASTTISCH**
PASSENGER TABLE
TABLE DES PASSANGERS

(30) Priorität: 06.04.2020 DE 102020204408
(43) Veröffentlichungstag der Anmeldung: 13.10.2021
(73) Patentinhaber: Siemens Mobility GmbH, 81739 München (DE)
(72) Erfinder: Schmidt, Gerhard, 45127 Essen (DE)

(56) Entgegenhaltungen:
- DE-A1- 10 031 700
- DE-A1-102009 022 625
- DE-A1-102015 204 705

## Beschreibung

Die Erfindung bezieht sich auf einen Fahrgasttisch, insbesondere für Fahrzeuge zur Personenbeförderung wie Schienenfahrzeuge, mit einer ortsfesten Tischplatte und einer Tischauszugsplatte, die mittels eines Getriebes aus einer zurückgezogenen Position unterhalb der Tischplatte in eine Gebrauchsposition bei der sich die Tischauszugsplatte an eine zugeordnete äußere Kante der Tischplatte anschließt, überführbar ist.

Ein solcher Fahrgasttisch ist beispielsweise aus der DE 10 2015 204 705 A1 bekannt. Beispielsweise Fahrgasttisch an Sitzgruppen von Schienenfahrzeugen sind in ihrer festen Tiefe begrenzt, um genügend Raum für einen Zugang zu Fahrgastsitzen freizuhalten. Um dennoch eine nutzbare Tischfläche nahe an die Sitzposition heranführen zu können, wird die Tischauszugsplatte verwendet, die sich in ihrer Gebrauchsposition unmittelbar die feste Tischplatte anschließt und somit insgesamt eine größere verfügbare Tischfläche bereitstellt. Dabei ist ein Getriebe zum Steuern der Bewegung der Tischauszugsplatte relativ zu der ortsfesten Tischplatte typischerweise so gewählt, dass die Tischauszugsplatte in ihrer Gebrauchs/Endposition bündig mit der ortsfesten Tischplatte zu liegen kommt.

Dabei ist zu berücksichtigen, dass aufgrund der erforderlichen tragenden Struktur der Tischplatte ein Bauraum zur Unterbringung des Getriebes typischerweise sehr beschränkt ist.

Beim Einsatz von Linearführungen für die Tischauszugsplatte wird es problematisch, wenn ein innerhalb der ortsfesten Tischplatte vorhandener Bauraum nur wenig größer als eine Auszugslänge der Tischauszugsplatte ist. Die Biegemomente aus einer vertikalen Belastung der Tischauszugsplatte in ihrer Gebrauchsposition müssen somit auf einer sehr kurzen Basis aufgenommen werden, was hohe innere Kräfte in der Führung bewirkt. Insofern besteht die Gefahr, dass zur Führung der Tischauszugsplatte eingesetzte Komponenten überlastet werden, bei Gleitführungen insbesondere eine Selbsthemmung droht.

Ausgehend hiervon liegt der Erfindung die Aufgabe zugrunde, einen Fahrgasttisch der eingangs genannten Art derart weiterzuentwickeln, dass eine geeignete Abstützung für die Tischauszugsplatte in ihrer Gebrauchsposition erzielbar ist.

Diese Aufgabe wird gelöst durch einen Fahrgasttisch mit den Merkmalen des Anspruchs 1. Dieser zeichnet sich gegenüber dem eingangs beschriebenen Fahrgasttisch dadurch aus, dass das Getriebe als unterhalb der Tischplatte angeordnetes ebenes Kurvengetriebe ausgebildet ist, bei dem eine erste Kurvenrolle auf einer gegenüber der Tischplatte ortfesten ersten Führungsbahn abrollt, und eine Bewegung des linearen Kurvengetriebes über einen ebenen Pantographen-Mechanismus, der einen mit der Tischauszugsplatte drehbar verbundenen ersten Koppelpunkt und einen gegenüber der Tischplatte ortsfesten zweiten Koppelpunkt aufweist, derart skaliert ist, dass der erste Koppelpunkt an der Tischauszugsplatte beim Verbringen der Tischauszugsplatte aus der zurückgezogenen Position in die Gebrauchsposition oder umgekehrt eine längere Bahnkurve im Raum zurücklegt als die erste Kurvenrolle.

Durch die Skalierung der Bewegung des linearen Kurvengetriebes mit Hilfe des Pantographen-Mechanismus ist es möglich, dass der erste Koppelpunkt Bewegungen ausführen kann, die deutlich außerhalb der Tischplatte liegen. Damit wird eine breite Abstützbasis für die Tischauszugsplatte erzielbar, was interne Kräfte auf praktikable Werte begrenzt.

Bevorzugt weist der Pantographen-Mechanismus auf:
- einen ersten Hebel, der an dem zweiten Koppelpunkt um eine erste Achse drehbar gelagert ist,
- einen zweiten Hebel, der mit dem ersten Hebel um eine dritte Achse drehbar verbunden ist und an seinem, der Tischauszugsplatte zugewandten Ende den ersten Koppelpunkt trägt, und entweder
- einen Rollenträger, der um eine zweite Achse mit dem ersten Hebel drehbar verbunden ist und an dem die erste Kurvenrolle um eine vierte Achse drehbar gelagert ist, und
- einen Lenker, der mit dem Rollenträger um eine fünfte Achse und mit dem zweiten Hebel um eine sechste Achse drehbar verbunden ist, oder
- einen Lenker, der um eine zweite Achse mit dem ersten Hebel drehbar verbunden ist, und
- einen Rollenträger, der mit dem Lenker um eine fünfte Achse drehbar verbunden ist, mit dem zweiten Hebel um eine sechste Achse drehbar verbunden ist und an dem die Kurvenrolle um eine vierte Achse drehbar gelagert ist.

Die beschriebene Anordnung von Hebeln, Lenker und Rollenträger bildet einen typischen Pantographen-Mechanismus aus. Zu berücksichtigen ist, dass die Positionen des Lenkers und des Rollenträgers in dem Pantographen-Mechanismus auch vertauscht sein können.

Vorzugsweise bilden die zweite, dritte, fünfte und sechste Achse wenigstens annähernd die Form eines Parallelogramms aus. Abweichungen von der Form eines Parallelogramms können sich insbesondere dadurch ergeben, dass Randbedingungen durch den vorhandenen Bauraum zu berücksichtigen sind.

Ein geeignete Skalierung der Bewegung des linearen Kurvengetriebes ergibt sich insbesondere dann, wenn der Abstand der zweiten Achse von der ersten Achse geringer als der Abstand der dritten Achse von der ersten Achse ist (Verhältnis z. B. 40 bis 60%). Dabei kann der Abstand der vierten Achse von der zweiten Achse geringer als der Abstand der siebten Achse von der dritten Achse sein (Verhältnis z. B. 30 bis 60%).

Bevorzugt ist zur Definition einer rotatorischen Lage der Tischauszugsplatte um den ersten Koppelpunkt ein weiteres Getriebe vorgesehen. Dieses kann eine an der Tischauszugsplatte gelagerte zweite Kurvenrolle aufweisen, die auf einer gegenüber der Tischplatte ortsfesten zweiten Führungsbahn abrollt. Bei dieser Ausführungsform ergibt sich eine breite Abstützbasis für die Tischauszugsplatte durch den günstigen Abstand zwischen dem ersten Koppelpunkt und der zweiten Kurvenrolle des weiteren Getriebes, wenn sich die Tischauszugsplatte in ihrer Gebrauchsposition befindet.

Die erste Achse, die vierte Achse und eine siebte Achse des ersten Koppelpunktes, um die die Tischauszugsplatte gegenüber dem zweiten Hebel drehbar ist, können annähernd in aller ebene angeordnet sein. Mit dieser Bedingung ist die Bahnkurve der Führungsrolle derjenigen des Koppelpunktes mathematisch ähnlich.

Aus der Konstruktion der Kurve des Koppelpunktes lässt sich somit direkt die Führungskurve konstruieren.

Dies kann insbesondere dann vorteilhaft sein, wenn die Führungsbahn aus einfachen Elementen wie Geraden und Kreisbögen hergestellt werden soll.

Zudem ist es möglich, dass die vierte und die fünfte Achse an dem Rollenträger zusammenfallen. Vorteil ist hierbei eine Funktionsvereinigung: Nur eine Bohrung im Rollenträger wäre erforderlich. Der Lagerzapfen der Kurvenrolle ist gleichzeitig der Gelenkbolzen der fünften Achse. Allerdings wird bei dieser Ausführungsform für die Kurvenrolle kein Standardbauteil einsetzbar sein. Ein längerer Hebel zur fünften und sechsten Achse würde auftretende Gelenkkräfte reduzieren.

An der Tischplatte kann ein Grundkörper befestigt sein, in den die erste und die zweite Führungsbahn jeweils als Nut ausgebildet ist und der eine Lagerung für die erste Achse aufweist. Eine solcher Grundkörper sorgt somit dafür, dass die Führungsbahnen sowie die Position der ersten Achse ortsfest gegenüber der Tischplatte sind.

Die Ausführung der Führungsbahnen als Nuten in dem vorzugsweise flachen Grundkörper erlaubt kostenneutral eine freie Gestaltung der Bahnkurven für die Kurvenrollen und ermöglicht so eine Optimierung auf intuitive Haptik in der Bedienung und enge Spaltmaße über den gesamten Bewegungsbereich.

Mit der vorgesehenen Kinematik kann außerdem bewirkt werden, dass sich die Tischauszugsplatte beim Aufprall von Fahrgästen infolge einer Kollision ohne nennenswerte Kräfte einschieben lassen. Damit entfällt die Betrachtung des Falls der ausgezogenen Position hinsichtlich eines weiteren Aufprallszenarios und des reduzierten Überlebensraums auf der Gegenseite.

Es ist hervorzuheben, dass die vorstehend beschriebene Ausbildung des die Bewegung der Tischauszugsplatte bestimmenden Getriebes baugleich auf beiden Seiten der Tischplatte vorgesehen sein kann. Vorzugsweise nutzen beide Getriebe jeweils einen Grundkörper.

Ein Ausführungsbeispiel der Erfindung wird nachfolgend unter Bezugnahme auf die Zeichnung noch näher erläutert. Es zeigen:
- Figur 1: eine schematische Querschnittsansicht einer Tischauszugsplatte in Kombination mit einer ortsfesten Tischplatte, wobei sich die Tischauszugsplatte in einer Gebrauchsposition befindet,
- Figur 2: eine schematische Querschnittsansicht der Tischauszugsplatte von Figur 1 in Kombination mit einer ortsfesten Tischplatte, wobei sich die Tischauszugsplatte in einer Zwischenposition befindet,
- Figur 3: eine schematische Querschnittsansicht der Tischauszugsplatte von Figur 1 in Kombination mit einer ortsfesten Tischplatte, wobei sich die Tischauszugsplatte in einer zurückgezogenen Position befindet und
- Figur 4: eine perspektivische Ansicht auf die Tischauszugsplatte der Fig. 1 bis 3 mit zugehörigen Getrieben zum Anbau an eine ortsfeste Tischplatte.

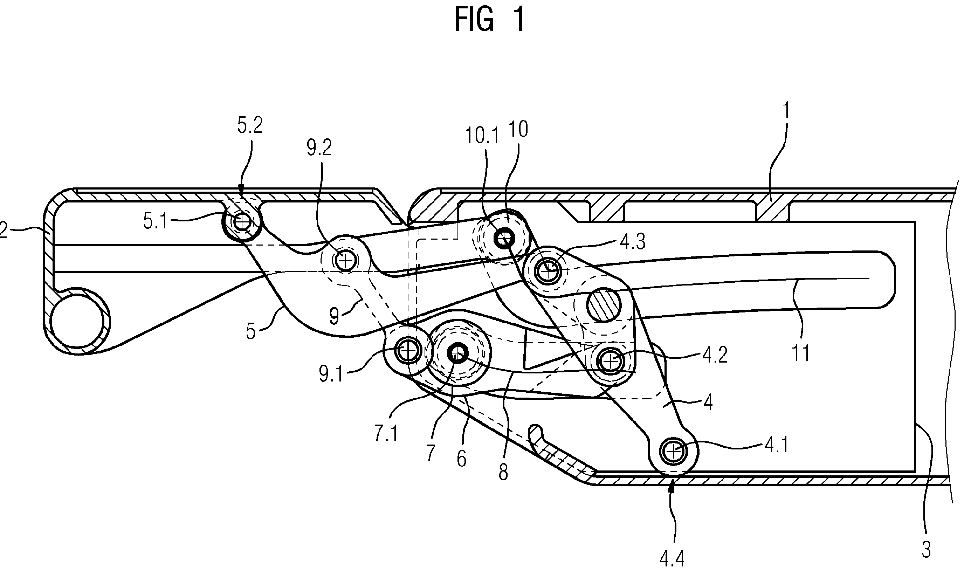

Figur 1 zeigt einen Randabschnitt einer Tischplatte 1, die ortsfest in einem Fahrzeug zur Personenbeförderung, beispielsweise einem Schienenfahrzeug, montiert ist, wobei der Randabschnitt der Tischplatte 1 einem (nicht dargestellten) Fahrgastsitz zugewandt ist. An die ortsfeste Tischplatte 1 schließt sich in Richtung Fahrgastsitz eine Tischauszugsplatte 2 an, wenn letztere sich in ihrer Gebrauchsposition befindet, d.h. eine Erweiterung der verfügbaren Oberfläche des Fahrgasttisches bildet.

Die Tischauszugsplatte 2 ist über ein Getriebe relativ zu der ortsfesten Tischplatte 1 bewegbar. Es ist eine flacher Grundkörper 3 vorgesehen, die in die Tischplatte 1 eingesetzt und an dieser befestigt ist. Die Ausbildung des Grundkörpers 3 bestimmt, wie später mehr im Detail erläutert wird, die relative Bewegung der Tischauszugsplatte 2 gegenüber der Tischplatte 1 mit.

Die Tischauszugsplatte 2 ist mit der Tischplatte 1 über einen im eingebauten Zustand des Fahrgasttisches vertikal angeordneten, ebenen Pantographen-Mechanismus verbunden, der einen ersten Hebel 4, einen zweiten Hebel 5, einen Rollenträger 6, der eine Kurvenrolle 7 trägt, und einen Lenker 9 umfasst. Dabei ist der erste Hebel 4 mittels einer ersten Achse 4.1 drehbar an den Grundkörper 3 und damit an der ortsfesten Tischplatte 1 angelenkt, und zwar im unteren Bereich der Tischplatte 1. Des Weiteren ist der Hebel 4 jeweils drehbar über eine zweite Achse 4.2 mit dem Rollenträger 6 und über eine Achse 4.3 mit dem zweiten Hebel 5 verbunden. Der Pantographen-Mechanismus wird dadurch vervollständigt, dass der Rollenträger 6, der auf einer vierten Achse 7.1 die erste Führungsrolle 7 trägt, über eine fünfte Achse 9.1 mit dem Lenker 9 verbunden ist, während der Lenker 9 über eine sechste Achse 9.2 drehbar mit dem zweiten Hebel 5 verbunden ist.

Im dargestellten Ausführungsbeispiel bilden die zweite, dritte, fünfte und sechste Achse ein Parallelogramm aus, wie es für die Ausbildung eines Pantographen-Mechanismus typisch ist.

Der Hebel 5 weist an seinem der Tischauszugsplatte 2 zugewandten Ende einen ersten Koppelpunkt 5.2 auf, wobei in dessen Bereich die Tischauszugsplatte 2 um eine siebte Achse 5.1 drehbar mit dem zweiten Hebel 5 verbunden ist. Auf der dem ersten Koppelpunkt 5.2 gegenüberliegenden Seite des Pantographen-Mechanismus ist ein zweiter Koppelpunkt 4.4 vorgesehen, der durch die erste Achse 4.1 gekennzeichnet ist, die eine Drehbewegung des ersten Hebels 4 relativ zur Tischplatte 1 gestattet.

Es ist ersichtlich, dass im dargestellten Ausführungsbeispiel die erste Achse 4.1, die vierte Achse 7.1 und eine siebte Achse 5.1 des ersten Koppelpunktes, um die die Tischauszugsplatte 2 gegenüber dem zweiten Hebel 5 drehbar ist, in einer Ebene angeordnet sind. Geringfügige Abweichungen von dieser Ebene sind zulässig. Auch ist es möglich, dass bei alternativen Ausführungsformen die vierte und die fünfte Achse 7.1, 9.1 an dem Rollenträger 6 zusammenfallen.

Wesentlicher Teil des Getriebes ist ein annähernd horizontal verlaufendes lineares Kurvengetriebe, bei dem die erste Kurvenrolle 7 auf einer ersten Führungsbahn 8 abrollt, die von einer in dem Grundkörper 3 vorgesehenen Nut gebildet ist.

Eine Drehbewegung der Tischauszugsplatte 2 um die siebte Achse 5.1 des ersten Koppelpunktes 5.2 wird von einem weiteren Getriebe bestimmt, das eine über eine achte Achse 10.1 an der Tischauszugsplatte 2 drehbar gelagerte zweite Kurvenrolle 10 umfasst, die in einer ebenfalls von einer Nut in dem Grundkörper 3 gebildeten zweiten Führungsbahn 11 abrollt.

Das derart ausgelegte Getriebe gestattet es, das der erste Koppelpunkt 5.1 Bewegungen ausführen kann, die deutlich außerhalb der Tischplatte 1 liegen. In dieser Weise wird zu der zweiten Kurvenrolle 10 eine breite Abstützbasis erzielt.

Der Pantographen-Mechanismus ist zusätzlich dadurch bestimmt, dass der Abstand der zweiten Achse 4.2 von der ersten Achse 4.1 wesentlich geringer als der Abstand der dritten Achse 4.3 von der ersten Achse 4.1 ist Zudem ist in der in Fig. 1 dargestellten Gebrauchsposition der Tischauszugsplatte 2 der Abstand der vierten Achse 7.1 von der dritten Achse 4.3 geringer als der Abstand der vierten Achse 7.1 von der zweiten Achse 4.2. Allgemein ist der Abstand der vierten Achse 7.1 von der zweiten Achse 4.2 geringer als der Abstand der siebten Achse 5.1 von der dritten Achse 4.3.

In der Darstellung von Figur 1 befinden sich die erste Kurvenrolle 7 und die zweite Kurvenrolle 10 innerhalb ihrer jeweiligen Führungsbahn 8, 11 in einer Endposition, die der Gebrauchsposition der Tischauszugsplatte 2 zugeordnet ist.

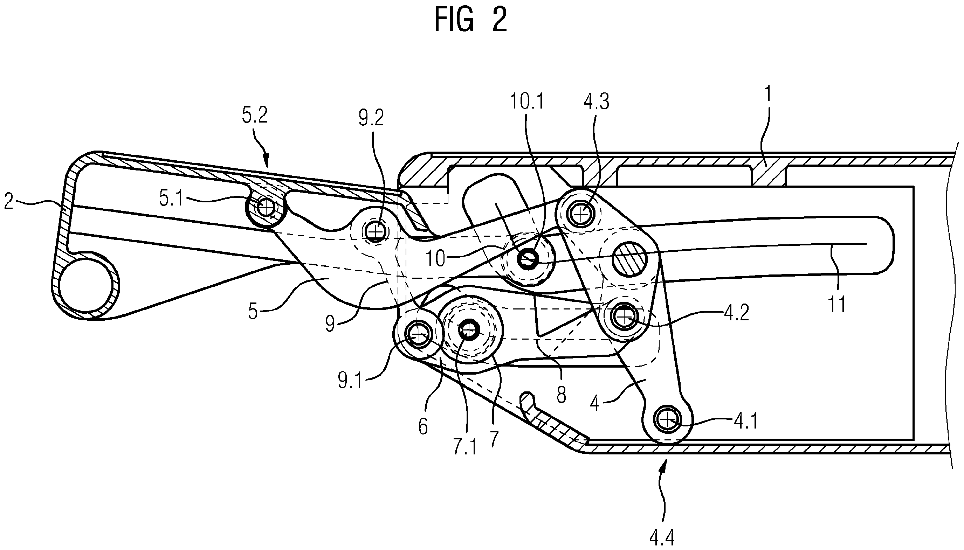

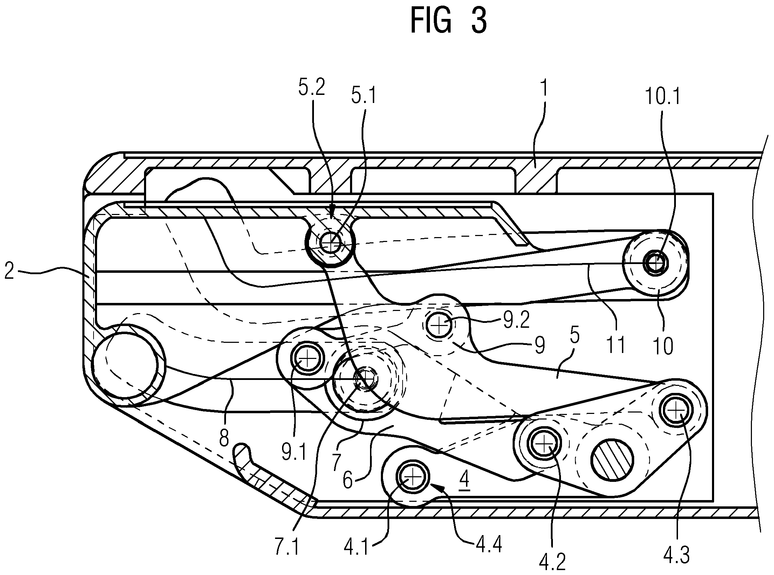

Während Figur 1 die relative Anordnung der Tischplatte 1 zu der Tischauszugsplatte 2 im Gebrauchszustand der Tischauszugsplatte 2 zeigt, bei denen Oberflächen der Tischplatte 1 und der Tischauszugsplatte 2 miteinander fluchten, veranschaulicht Figur 2 eine Zwischenposition der Tischauszugsplatte 2, bei der sie sich bereits eine erste Strecke in Richtung auf die in Figur 3 dargestellte zurückgezogene Position bewegt hat. Ein Vergleich der Figuren 1 und 2 zeigt, dass sich die erste Kurvenrolle 7 geringfügig horizontal einwärts der Tischplatte 1 entlang der Führungsbahn 8 bewegt hat, während die zweite Führungsrolle 10 aus ihrer in Figur 1 dargestellten Endposition, bezogen auf die Tischplatte 1, eine Bewegung schräg nach unten und einwärts der Tischplatte 1 vollzogen hat. Die jeweiligen Positionen des ersten Hebels 4, des zweiten Hebels 5, des Rollenträgers 6 und des Lenkers 9 folgen der Bewegung der ersten Kurvenrolle 7 entlang der ersten Führungsbahn 8 und bestimmen damit die Position des ersten Koppelpunktes 4.4.

Figur 3 zeigt die Tischauszugsplatte 2 in ihrer zurückgezogenen Position unterhalb der Tischplatte 1, wobei die Tischauszugsplatte 2 vollständig in die Tischplatte 1 aufgenommen ist, wobei die Tischplatte 1 und die Tischauszugsplatte 2 an ihren einem Fahrgastsitz zugewandten Seiten eine im Wesentlichen zusammenhängende Stirnfläche ausbilden.

Die erste Kurvenrolle 7 hat ihre Endposition in der ersten Führungsbahn 8 erreicht und im Vergleich zur Figur 2 eine im Wesentlichen horizontale, lineare Bewegung vollzogen. Auch die zweite Kurvenrolle 10 befindet sich nun in ihrer Endposition in der zweiten Führungsbahn 11 und hat im Vergleich zu Figur 2 eine leicht schräg nach oben verlaufende Bewegung einwärts der Tischplatte 1 vollführt.

In Zusammensicht zeigen die Figuren 1 bis 3, dass das von der zweiten Achse 4.2, der dritten Achse 4.3, der fünften Achse 9.1 und der sechsten Achse 9.2 aufgespannte Parallelogramm von seiner Art her erhalten bleibt. Ebenfalls ist ersichtlich, dass die Bewegung des linearen Kurvengetriebes derart skaliert ist, dass der erste Koppelpunkt an der Tischauszugsplatte 2 beim Verbringen der Tischauszugsplatte 2 aus der zurückgezogenen Position in die Gebrauchsposition oder umgekehrt eine längere Bahnkurve im Raum zurücklegt als die erste Kurvenrolle 7.

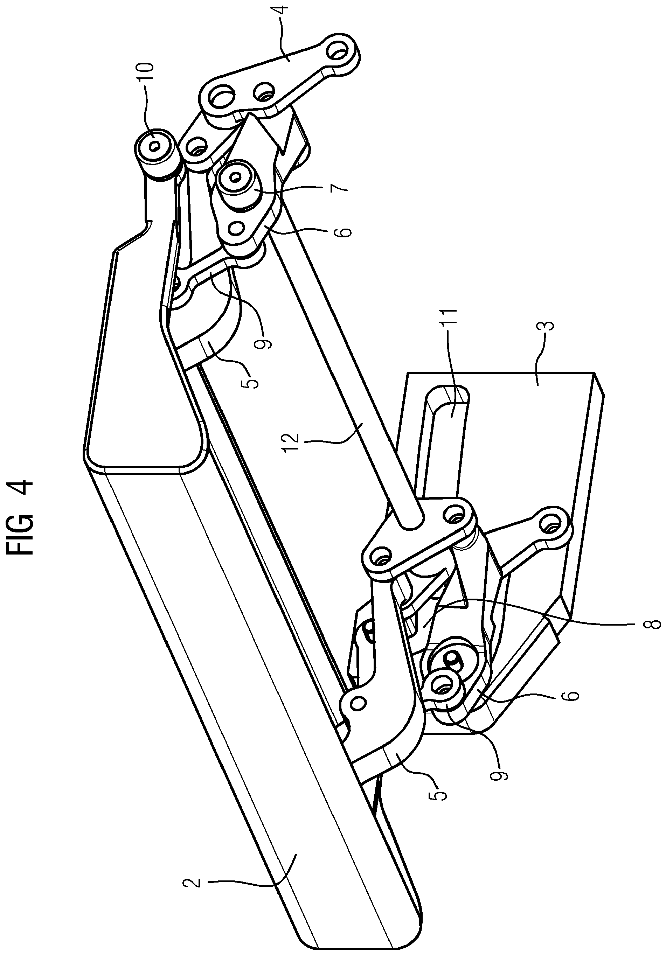

Aus Figur 4 geht hervor, dass das zuvor anhand der Figuren 1 bis 3 erläuterte Getriebe zweifach vorgesehen ist, und zwar jeweils an einer Seite der Tischauszugsplatte 2. Dabei sind zum Synchronisieren der Bewegungen der Getriebe die ersten Hebel 4 mittels einer torsionssteifen Koppelstange 12 miteinander verbunden. Alternativ könnten auch die Lenker 9 in ihrer Bewegung miteinander gekoppelt sein.

## Patentansprüche

1. Fahrgasttisch mit einer ortsfesten Tischplatte (1) und einer Tischauszugsplatte (2), die mittels eines Getriebes aus einer zurückgezogenen Position unterhalb der Tischplatte (1) in eine Gebrauchsposition, bei der sich die Tischauszugsplatte (2) an eine zugeordnete äußere Kante der Tischplatte (1) anschließt, überführbar ist, **dadurch gekennzeichnet, dass**
das Getriebe als unterhalb der Tischplatte (1) angeordnetes lineares Kurvengetriebe ausgebildet ist, bei dem eine erste Kurvenrolle (7) auf einer gegenüber der Tischplatte (1) ortfesten ersten Führungsbahn (8) abrollt, und eine Bewegung des linearen Kurvengetriebes über einen ebenen Pantographen-Mechanismus, der einen einen gegenüber der Tischplatte (1) ortsfesten ersten Koppelpunkt (4.4) und einen mit der Tischauszugsplatte (2) drehbar verbundenen zweiten Koppelpunkt (5.2) aufweist, derart skaliert ist, dass der zweite Koppelpunkt (5.2) an der Tischauszugsplatte (2) beim Verbringen der Tischauszugsplatte (2) aus der zurückgezogenen Position in die Gebrauchsposition oder umgekehrt eine längere Bahnkurve im Raum zurücklegt als die erste Kurvenrolle (7) .

2. Fahrgasttisch nach Anspruch 1,
**dadurch gekennzeichnet, dass**
der Pantographen-Mechanismus aufweist:
- einen ersten Hebel (4), der um eine erste Achse (4.1) drehbar gelagert ist,
- einen zweiten Hebel (5), der mit dem ersten Hebel (4) um eine dritte Achse (4.3) drehbar verbunden ist und an seinem, der Tischauszugsplatte (2) zugewandten Ende den zweiten Koppelpunkt (5.2) trägt, und entweder
- einen Rollenträger (6), der um eine zweite Achse (4.2) mit dem ersten Hebel (4) drehbar verbunden ist und an dem die Kurvenrolle (10) um eine vierte Achse (7.1) drehbar gelagert ist, und
- einen Lenker (9), der mit dem Rollenträger (6) um eine fünfte Achse (9.1) und mit dem zweiten Hebel (5) um eine sechste Achse (9.2) drehbar verbunden ist, oder
- einen Lenker (9), der um eine zweite Achse (4.2) mit dem ersten Hebel (4) drehbar verbunden ist, und
- einen Rollenträger (6), der mit dem Lenker (9) um eine fünfte Achse (9.1) drehbar verbunden ist, mit dem zweiten Hebel (5) um eine sechste Achse (9.2) drehbar verbunden ist und an dem die Kurvenrolle (10) um eine vierte Achse (7.1) drehbar gelagert ist.

3. Fahrgasttisch nach Anspruch 2,
**dadurch gekennzeichnet, dass**
die zweite (4.2), dritte (4.3), fünfte (9.1) und sechste Achse (9.2) wenigstens annähernd die Form eines Parallelogramms ausbilden.

4. Fahrgasttisch nach einem der Ansprüche 2 bis 3,
**dadurch gekennzeichnet, dass**
der Abstand der zweiten Achse (4.2) von der ersten Achse (4.1) geringer als der Abstand der dritten Achse (4.3) von der ersten Achse (4.1) ist.

5. Fahrgasttisch nach einem der Ansprüche 2 bis 4,
**dadurch gekennzeichnet, dass**
der Abstand der vierten Achse (7.1) von der zweiten Achse (4.3) geringer als der Abstand der siebten Achse (5.1) von der dritten Achse (4.2) ist.

6. Fahrgasttisch nach einem der Ansprüche 1 bis 5,
**dadurch gekennzeichnet, dass**
zur Definition einer rotatorischen Lage des Tischauszugsplatte (2) um den zweiten Koppelpunkt (5.2) ein weiteres Getriebe vorgesehen ist.

7. Fahrgasttisch nach Anspruch 6,
**dadurch gekennzeichnet, dass**
das weitere Getriebe eine an der Tischauszugsplatte (2) gelagerte zweite Kurvenrolle (10) aufweist, die auf einer gegenüber der Tischplatte (1) ortsfesten zweiten Führungsbahn (11) abrollt.

8. Fahrgasttisch nach Anspruch 7,
**dadurch gekennzeichnet, dass**
an der Tischplatte (1) ein Grundkörper (3) befestigt ist, in dem die erste und die zweite Führungsbahn (8; 11) jeweils als Nut ausgebildet ist und der eine Lagerung für die erste Achse (4.1) aufweist.

9. Fahrgasttisch nach einem der Ansprüche 1 bis 8,
**dadurch gekennzeichnet, dass**
die erste Achse (4.1), die vierte Achse (7.1) und eine siebte Achse (5.1) des zweiten Koppelpunktes (5.2), um die die Tischauszugsplatte (2) gegenüber dem zweiten Hebel (5) drehbar ist, annähernd in einer Ebene angeordnet sind.

10. Fahrgasttisch nach einem der Ansprüche 1 bis 9,
**dadurch gekennzeichnet, dass**
die vierte (7.1) und die fünfte Achse (9.1) an dem Rollenträger (6) zusammenfallen.

## Claims

1. Passenger table comprising a stationary table top (1) and a table extension panel (2) which, by means of a gear mechanism, can be transferred from a retracted position underneath the table top (1) into a use position, in which the table extension panel (2) adjoins an associated outer edge of the table top (1), **characterized in that**
the gear mechanism is designed as a linear cam mechanism arranged underneath the table top (1), in which a first cam roller (7) rolls on a first guide path (8) that is stationary with respect to the table top (1), and a movement of the linear cam mechanism is scaled via a flat pantograph mechanism, which has a first coupling point (4.4) that is stationary with respect to the table top (1) and a second coupling point (5.2) that is rotatably connected to the table extension panel (2), in such a way that, as the table extension panel (2) is moved from the retracted position into the use position or vice versa, the second coupling point (5.2) on the table extension panel (2) travels over a longer path curve in space than the first cam roller (7).

2. Passenger table according to Claim 1,
**characterized in that**
the pantograph mechanism has:
- a first lever (4), which is mounted such that it can rotate about a first axis (4.1),
- a second lever (5), which is connected to the first lever (4) such that it can rotate about a third axis (4.3) and carries the second coupling point (5.2) at its end facing the table extension panel (2), and either
- a roller carrier (6), which is connected to the first lever (4) such that it can rotate about a second axis (4.2) and on which the cam roller (10) is mounted such that it can rotate about a fourth axis (7.1), and
- a link (9), which is connected to the roller carrier (6) such that it can rotate about a fifth axis (9.1) and to the second lever (5) such that it can rotate about a sixth axis (9.2), or
- a link (9), which is connected to the first lever (4) such that it can rotate about a second axis (4.2), and
- a roller carrier (6), which is connected to the link (9) such that it can rotate about a fifth axis (9.1), is connected to the second lever (5) such that it can rotate about a sixth axis (9.2), and on which the cam roller (10) is mounted such that it can rotate about a fourth axis (7.1) .

3. Passenger table according to Claim 2,
**characterized in that**
the second (4.2), third (4.3), fifth (9.1) and sixth axis (9.2) at least approximately form the shape of a parallelogram.

4. Passenger table according to either of Claims 2 and 3, **characterized in that**
the distance of the second axis (4.2) from the first axis (4.1) is smaller than the distance of the third axis (4.3) from the first axis (4.1).

5. Passenger table according to one of Claims 2 to 4,
**characterized in that**
the distance of the fourth axis (7.1) from the second axis (4.3) is smaller than the distance of the seventh axis (5.1) from the third axis (4.2).

6. Passenger table according to one of Claims 1 to 5,
**characterized in that**
a further gear mechanism is provided to define a rotational position of the table extension panel (2) about the second coupling point (5.2).

7. Passenger table according to Claim 6,
**characterized in that**
the further gear mechanism has a second cam roller (10) mounted on the table extension panel (2), which rolls on a second guide path (11) that is stationary with respect to the table top (1).

8. Passenger table according to Claim 7,
**characterized in that**
a main body (3), in which the first and the second guide track (8; 11) are each formed as a groove and which has a bearing for the first axis (4.1), is fixed to the table top (1).

9. Passenger table according to one of Claims 1 to 8,
**characterized in that**
the first axis (4.1), the fourth axis (7.1) and a seventh axis (5.1) of the second coupling point (5.2), about which the table extension panel (2) can rotate with respect to the second lever (5), are arranged approximately in one plane.

10. Passenger table according to one of Claims 1 to 9,
**characterized in that**
the fourth (7.1) and the fifth axes (9.1) coincide on the roller carrier (6).

## Revendications

1. Table pour passager comprenant un plateau (1) de table fixe en emplacement et un plateau (2) sortant de table qui, au moyen d'un mécanisme peut passer d'une position escamotée en-dessous du plateau (1) de table à une position d'utilisation, dans laquelle le plateau (2) sortant de table se raccorde à un bord extérieur associé du plateau (1) de table,
**caractérisée en ce que**
le mécanisme comprend un mécanisme linéaire à came disposé sous le plateau (1) de table, dans lequel un premier galet (7) de came roule sur une première voie (8) de guidage fixe en emplacement par rapport au plateau (1) de la table, et un mouvement du mécanisme linéaire à came est, par l'intermédiaire d'un mécanisme à pantographe plan, qui a un premier point (4.4) de liaison fixe en emplacement par rapport au plateau (1) de la table et un deuxième point (5.2) de liaison relié à rotation au plateau (2) sortant de la table, d'une échelle telle que le deuxième point (5.2) de liaison sur le plateau (2) sortant de la table parcourt dans l'espace, lors du passage du plateau (2) sortant de la table de la position escamotée à la position d'utilisation ou inversement, une trajectoire plus longue que le premier galet (7) de came.

2. Table pour passager suivant la revendication 1, **caractérisée en ce que**
le mécanisme à pantographe a :
- un premier levier (4), qui est monté tournant autour d'un premier axe (4.1),
- un deuxième levier (5), qui est relié au premier levier (4) à rotation autour d'un troisième axe (4.3) et qui porte, à son extrémité, tournée vers le plateau (2) sortant de la table, le deuxième point (5.2) de liaison, et ou bien
- un support (6) de came, qui est relié au premier levier (4) à rotation autour d'un deuxième axe (4.2) et sur lequel le galet (10) de came est monté tournant autour d'un quatrième axe (7.1), et
- une biellette (9), qui est reliée au support (6) de came à rotation autour d'un cinquième axe (9.1) et au deuxième levier (5) autour d'un sixième axe (9.2), ou bien
- une biellette (9), qui est reliée au premier levier (4) à rotation autour du deuxième axe (4.2), et
- un support (6) de came, qui est relié à la biellette (9) à rotation autour d'un cinquième axe (9.1) au deuxième levier (5) autour d'un sixième axe (9.2) et sur lequel le galet (10) de came est monté tournant autour d'un quatrième axe (7.1) .

3. Table pour passager suivant la revendication 2, **caractérisée en ce que**
le deuxième (4.2), le troisième (4.3), le cinquième (9.1) et le sixième axes (9.2) forment au moins à peu près un parallélogramme.

4. Table pour passager suivant l'une des revendications 2 à 3, **caractérisée en ce que**
la distance du deuxième axe (4.2) au premier axe (4.1) est plus petite que la distance du troisième axe (4.3) au premier axe (4.1).

5. Table pour passager suivant l'une des revendications 2 à 4, **caractérisée en ce que**
la distance du quatrième axe (7.1) au deuxième axe (4.3) est plus petite que la distance du septième axe (5.1) au troisième axe (4.2).

6. Table pour passager suivant l'une des revendications 1 à 5, **caractérisée en ce qu'**
un autre mécanisme est prévu pour la définition d'une position en rotation du plateau (2) sortant de la table autour du deuxième point (5.2) de liaison.

7. Table pour passager suivant la revendication 6, **caractérisée en ce que**
l'autre mécanisme a un deuxième galet (10) de came, qui est monté sur la plateau (2) sortant de la table et qui roule sur une deuxième voie (11) de guidage fixe en emplacement par rapport au plateau (1) de la table.

8. Table pour passager suivant la revendication 7, **caractérisée en ce que**
sur le plateau (1) de la table est fixé un corps (3) de base, dans lequel la première et la deuxième voies (8 ; 11) de guidage sont constituées chacune sous la forme d'une rainure et qui a un palier pour le premier axe (4.1).

9. Table pour passager suivant l'une des revendications 1 à 8, **caractérisée en ce que**
le premier axe (4.1), le quatrième axe (7.1) et un septième axe (5.1) du deuxième point (5.2) de liaison, autour duquel le plateau (2) sortant de la table peut tourner par rapport au deuxième levier (5), sont disposés à peu près dans un plan.

10. Table pour passager suivant l'une des revendications 1 à 9, **caractérisée en ce que**
le quatrième (7.1) et le cinquième axes (9.1) coïncident sur le support (6) de came.
